(19)

Europäisches
Patentamt
European
Patent Office
Office européen
des brevets

(11) **EP 4 124 848 A1**

(12) **EUROPEAN PATENT APPLICATION**

(43) Date of publication:
**01.02.2023 Bulletin 2023/05**

(21) Application number: **21188044.8**

(22) Date of filing: **27.07.2021**

(51) International Patent Classification (IPC):
**G01N 21/21** (2006.01)  **G01N 21/23** (2006.01)
**G01N 21/41** (2006.01)

(52) Cooperative Patent Classification (CPC):
**G01N 21/21; G01J 4/00; G01N 21/4133;**
G01N 21/23; G01N 2021/216

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Johannes Gutenberg-Universität Mainz
55122 Mainz (DE)**

• **Max-Planck-Gesellschaft zur Förderung
der Wissenschaften e.V.
80539 München (DE)**

(72) Inventors:
• **Bougas, Lykourgos
55131 Mainz (DE)**
• **Williams, Jonathan
55122 Mainz (DE)**

(74) Representative: **Durm Patentanwälte PartG mbB
Patentanwälte
Moltkestrasse 45
76133 Karlsruhe (DE)**

(54) **ABSOLUTE OPTICAL CHIRAL ANALYSIS**

(57)     The present invention relates to a device (10) for an optical chiral analysis of a chiral material (54) comprising: a light source (12) configured to continuously provide a first beam (14) and second beam (16), wherein the first beam and second beam are each a continuous wave laser beam; a sample container (22) for housing the chiral material, wherein the sample container is a part of an optical resonator; a Faraday rotator (20), wherein the Faraday rotator is a part of the optical resonator (26); light-guiding means (18) for guiding said first beam and second beam, wherein the means are configured to guide one beam in a first propagation direction through the Faraday rotator and in the first propagation direction through the sample container, the other beam in a second propagation direction through the Faraday rotator and in the second propagation direction through the sample container, wherein in the first propagation direction is opposite to the second propagation direction, to generate an R mode (R1, R2) and L mode (L1, L2) in the optical resonator for each propagation direction respectively; detector means (40, 48) for detecting beam properties of the first beam and the second beam; wherein the detector means comprise a control loop (66, 72) for controlling the first beam and/or the second beam into a resonance with said modes and an acquisition device to read out their resonant frequencies and/or polarizations for a measurement of the total refractive index and chirality of the chiral material in the sample container.

Fig. 4b

EP 4 124 848 A1

**Description**

The present invention relates to optical measurements of a chiral substance. For example when developing a new drug substance that is chiral, such a measurement can directly yield the enantiomeric excess of the compound and often one of the two enantiomers is the active one, whereas the other one can potentially be harmful.

Prior art document US2015323445A1 discloses a polarimeter for measuring chirality of a material comprising an optical ring cavity comprising a plurality of reflective elements configured to promote bi-directional propagation of a laser beam within the cavity, a laser-emitting device configured to introduce a first input laser beam and a second input laser beam into the ring cavity, and a Faraday rotator and a phase compensator configured to suppress a birefringent background as the first and second laser beams pass through the ring cavity, wherein the plurality of mirrors, Faraday rotator, and phase compensator are configured such that light from the first and second laser beams passes through a chiral material located within the cavity a sufficient number of times for a measurement of optical rotatory dispersion (ORD) and circular dichroism (CD) of light transmitted through the chiral material to be obtained. Particular implementations include monolithic ring cavities or microresonators or use of intra-cavity gain media.

Known chromatographic techniques require several minutes and extensive calibrations to provide a quantitative measurement of the enantiomeric excess and allow for accurate enantiomeric identification.

An important limiting factor in chiral sensing using known polarimetric schemes is the necessity to perform a null sample measurement. Preferably a background and/or instrument calibration measurement is needed as a reference for the signal of the chiral sample. The act of removing the sample can introduce errors to the measurement system and limits both the accuracy and precision of the measurement.

It is an object of the present invention to provide a robust and fast possibility to measure a chirality of a material in an absolute manner, which preferably allows a real time measurement and can be conducted in a mobile device.

In a first aspect of the present invention a device for an optical chiral analysis of a chiral material is presented, the device comprising:

a light source configured to continuously provide a first and second beam,

wherein the first beam and second beam are each a continuous wave laser beam;

a sample container for housing the chiral material, wherein the sample container is a part of an optical resonator;

a Faraday rotator; wherein the Faraday rotator is a part of the optical resonator;

light-guiding means for guiding said first beam and second beam, wherein the means are configured to guide

one beam in a first propagation direction through the Faraday rotator and in the first propagation direction through the sample container,

the other beam in a second propagation direction through the Faraday rotator and in the second propagation direction through the sample container, wherein the first propagation direction is opposite to the second propagation direction, to generate an R mode and L mode in the optical resonator for each propagation direction respectively;

detector means for detecting beam properties of the first beam and of the second beam, wherein the detector means comprise a control loop for controlling the first beam and/or the second beam into a resonance with said R and L modes and an acquisition device to read out the resonant frequencies and/or polarizations of the first beam and/or the second beam for a measurement of the total refractive index and of the chirality of the chiral material in the sample container.

In a further aspect of the present invention a corresponding method for an optical chiral analysis of a chiral material is presented which comprises the following steps:

continuously providing a first beam and second beam, wherein the first beam and second beam are each a continuous wave laser;

providing the chiral material in a sample container, wherein the sample container is a part of an optical resonator;

providing a Faraday rotator wherein the Faraday rotator is a part of the optical resonator;

guiding the first laser beam in a first propagation direction through the Faraday rotator and in the first propagation direction through the sample container and guiding the second laser beam in a second propagation direction through the

Faraday rotator and in the second propagation direction through the sample container, wherein the first propagation direction is opposite to the second propagation direction, to generate an R mode and L mode in the optical resonator for each propagation direction respectively;

detecting beam properties of the first beam and of the second beam; and

deriving an average refractive index and a chirality of the chiral material from said beam properties. Deriving a chirality preferable comprises deriving a chirality parameter.

A light source that continuously provides a first continuous wave laser beam and a second continuous wave laser beam allows a fast and robust measurement of the optical properties of the chiral material. The chiral material can preferably be handled and analyzed when a sample container is used for housing the chiral material. A chiral material can be a fluid, a substance and/or a solid. Laser sources offer the option to modify their emission frequency through either direct current control and/or temperature control or through wavelength selective elements, such as for example piezo elements, affecting their emission frequency.

Said sample container can be arranged with a Faraday rotator and light-guiding means to form an optical resonator. In the optical resonator, the first and/or second laser beam can be brought into resonance with the resonator to analyze the chiral material. A resonator can synonymously be called cavity or optical cavity. However, in the following the term resonator is mainly used.

The device further comprises light-guiding means for guiding said first beam and second beam. Light-guiding means can be principally known mirrors, reflective elements, fiber wire or any device that can guide laser waves. By passing the above-described light path and having a first propagation direction which is opposite to the second propagation direction, the first and the second beam can be resonantly coupled to an R mode and an L mode of the resonator respectively, if a chiral material is present in the sample container. By providing detector means which comprise a control loop, the first beam and/or second beam can be coupled fast and robustly into the resonator, wherein beam properties such as polarization and/or frequency and/or amplitude can be detected. By this, a total refractive index and/or the chirality of the material in the sample container can be derived.

Electromagnetic radiation propagating through a chiral medium experiences a complex index of refraction that differs in both its real and imaginary parts for right-circular polarization (RCP) and left-circular polarization (LCP). Optical activity, i.e. the ability of a chiral medium to rotate and absorb linearly polarized light travelling through it, can be therefore described by introducing a general form for the refractive index of the chiral medium that differs for RCP and LCP:

$$\varphi_c = \frac{\pi\, l}{\lambda}\,(n_L - n_R),$$ with $\lambda$ the wavelength of light and $l$ the length of the chiral medium. The (complex) indices of refraction $n_{R/L}$ of the chiral medium for RCP and LCP, respectively, can then be expressed as $n_{R/L} = n_c \mp \kappa$, with $n_c =$

$$\frac{1}{2}(n_L + n_R)$$ the average (background) refractive index and $\kappa$ the chirality ('Pasteur') parameter. The real part of $\kappa$ [Re($\kappa$)] is associated with effects of circular birefringence, while its imaginary part [Im($\kappa$)] is associated with effects of circular dichroism.

In a preferred embodiment, the control loop is configured to modify the optical length of the resonator. Additionally or alternatively, the control loop is configured to modify the frequency, polarization and/or amplitude of the first beam and/or the second beam. Thus, two possible techniques are provided for a fast and precise modification of the device to be in a resonant state with the first beam and/or the second beam.

In another preferred embodiment, the control loop comprises a piezo element to modify the optical length of the optical resonator. Alternatively, the control loop comprises an electro-optic device and/or an acousto-optic device to modify the frequency, polarization and amplitude of the first laser beam and/or the second laser beam. By using a piezo element to modify the optical length of the optical resonator and by this the modes of the resonator, the frequency, polarization and/or amplitude of the laser beams preferably are modified to couple resonantly into these modes. By modifying the frequency, polarization and/or amplitude of the first and/or second laser beam, the resonator can stay mechanically unchanged. Thus, a fast measurement of the different modes is possible.

Preferably the device comprises detector means which comprise a phase and frequency modulator for modulating the first beam and/or the second beam to comprise an error signal in resonance with said modes. An error signal allows to achieve a precise measurement of the different modes.

Advantageously, the phase and frequency modulator is configured to apply a phase and/or frequency modulation technique to generate an anti-symmetric resonance curve. The phase and/or frequency modulation technique preferably comprises a Pound-Drever-Hall technique. An anti-symmetric resonance curve further improves the ability to derive the resonant condition for said modes precisely. A phase and frequency modulator may also known as a frequency mixer and can modify the phase and/or frequency of a laser beam.

In a further preferred embodiment, the detector means are configured to convert the first beam and/or the second beam into an electrical signal respectively. The converted signals of the first beam and/or the second beam are modified, preferably demodulated, to comprise an error signal in a resonance, wherein said converted and modified signal is used as control signal for the control loop. By this the control loop can couple the first and/or the second beam into a resonant state to derive via the beam properties said modes.

Preferably the detector means for detecting beam properties are configured to apply a signal reversal. A signal reversal comprises alternating the light source frequencies to excite different mode pairs. A signal reversal comprises an input light polarization reversal. Additionally or alternatively, a signal reversal comprises a magnetic field reversal of the Faraday rotator's magnetic field. By applying the above-described signal reversals, a higher signal-to-noise ratio can be achieved. Further, it is possible to derive in a very short time period another measurement of mode pairs and thus achieve a higher precision in the measurement of a chirality of the material.

Preferably the means for guiding said first beam and second beam are configured to guide the first beam and the second beam in a four-mirror bowtie arrangement. By this, the optical resonator can be compact. Due to the counter-propagating beams, parts of the beam path can be double-used, e. g. for the first beam and at the same time for the second beam.

In a further preferred embodiment, the first beam and/or the second beam are reflected and/or transmitted by the bowtie arrangement. The reflected beams are used as control signals for the control loop. By using the reflected beams as a control signal for the control loop, the beam path to the resonator, a bowtie arrangement or cavity can be used two times. Preferably the reflected first beam travels via the beam path that is used for the second beam to the bowtie arrangement and vice versa.

Preferably the providing of the chiral material in the sample container comprises a filling of the chiral material into the sample container and monitoring the beam properties during the filling to calculate an average refractive index of the chiral material. By this, a refractive index can directly be derived during the filling. It has to be understood that filling of a solid material comprises the step of building up a film of the solid material in the sample container.

In a preferred embodiment, detecting beam properties of the first beam and the second beam comprises detecting modes of resonator which the first beam and second beam couple into and deriving a resonator spectrum comprising four eigenmodes. Preferably the eigenmodes are said modes of the first and second propagation direction comprising an R mode for the first and second propagation direction and an L mode for the first and second propagation direction respectively.

Preferably the four eigenmodes comprise an R mode pair of the resonator which the first laser beam and the second laser beam couple into and an L mode pair which the first laser beam and the second laser beam couple into. A mode-splitting between the R mode pair and the L mode pair is used to extract the chirality of the chiral material. Additionally or alternatively, the resonance frequency of any of the eigenmodes is used to extract the average refractive index of the chiral material. By this, a fast, precise and robust measurement of the chirality can be achieved. Further, a measurement for the refractive index is provided which leads to an improved analysis of the chiral material.

In a preferred embodiment, deriving the resonator spectrum comprises reversing signals to derive a further resonator spectrum from the modes of the resonator. Preferably measurements with the resonator spectrum and measurements with the further resonator spectrum are combined to reduce background noise. Reversing signals comprises alternating the light source's frequency and/or the frequencies of the first and/or the second beam to excite different mode pairs. Reversing signals comprises reversing an input light polarization. Additionally or alternatively, reversing signals comprises reversing a magnetic field of the Faraday rotator. Signal reversals allow a fast second measurement, preferably without removing or modifying the sample. Thus, the signal quality and the precision of the measurement can be improved in a fast and robust manner.

In a further preferred embodiment, guiding of the beams comprises guiding said first beam and second beam in a bowtie arrangement and reflecting and/or transmitting said first beam and second beam in the bowtie arrangement. The reflected beams are used as control signal for a control loop to keep the beams in resonance with said R and L modes. Preferably detecting beam properties comprises the generation of an error signal from the first beam and/or the second beam and using said signal for the control loop to measure the frequency of the first beam and/or the second beam. By this, a robust method for a complete and precise measurement of the chirality is provided. Furthermore, it allows a generation of an error signal, a reliable measurement of the beam properties and, thus, the chirality and/or a total refractive index of the material.

Preferred embodiments of the invention are defined in the dependent claims. It shall be understood that the claimed method and/or the device have similar and/or identical preferred embodiments as the claimed device and/or method, in particular as defined in the dependent claims and as disclosed herein.

The present invention is based on the idea that an absolute optical chiral sensing and analysis protocol can be based on a chiral-sensitive resonator-based polarimeter that employs continuous-wave laser sources and a frequency-based measurement scheme.

PDH falls under the general category of phase/frequency modulation techniques. The crucial component is the need for an antisymmetric resonance curve that allows to identify the central frequency value of a resonator mode. There exist alternative frequency-stabilization schemes such as side-fringe locking or optical feedback schemes. However, transmission-based techniques have limited bandwidths, they do not allow for measurement of noise over a wide range of frequencies and are sensitive to intensity noise of the laser beams, while optical feedback schemes cannot be easily employed in our measurement scheme. Phase/frequency modulation schemes, such as the PDH, are a general approach for generating error signals from resonator resonances.

An AO preferably contains a crystal and makes use of the acousto-optic effect to diffract and shift the frequency of an incident radiation. An oscillating signal, e.g. an RF - radio frequency - signal, drives a piezoelectric transducer connected to the crystal to generate sound waves within the crystal. These sound waves diffract the incident radiation, resulting in distinct outgoing diffracted orders from the AO. Additionally, the optical powers of the diffracted beams depend on the RF power applied to generate the sound waves, and as such we can control the optical power of the diffracted beams by controlling the AO supplied RF power.

An EO preferably contains a birefringent crystal and the wave retardation it introduces to the transmitted radiation can be controlled using an external voltage supplied directly to the crystal, i.e. an EO is a voltage-controlled waveplate.

These and other aspects of the invention will be apparent from and elucidated with reference to the embodiment(s) described hereinafter. In the following drawings

Figure 1          shows a simplified scheme of a device according to the present invention;

Figure 2          shows a simplified scheme of an alternative device according to the present invention;

Figure 3          shows a simplified scheme of a bowtie arrangement;

Figures 4a and 4b  show a light path in a simplified scheme of a device according to the present invention with more details;

Figure 5          shows a modeled spectrum which can be derived with a device according to the present invention;

Figure 6          shows a modeled spectrum before and after a magnetic field reversal;

Figure 7          shows a modeled spectrum before and after a frequency jump;

Figure 8          shows a modeled spectrum before and after a polarization reversal;

Figure 9          shows schematically the steps of a method according to the present invention; and

Figure 10         shows a method according to the present invention in more details.

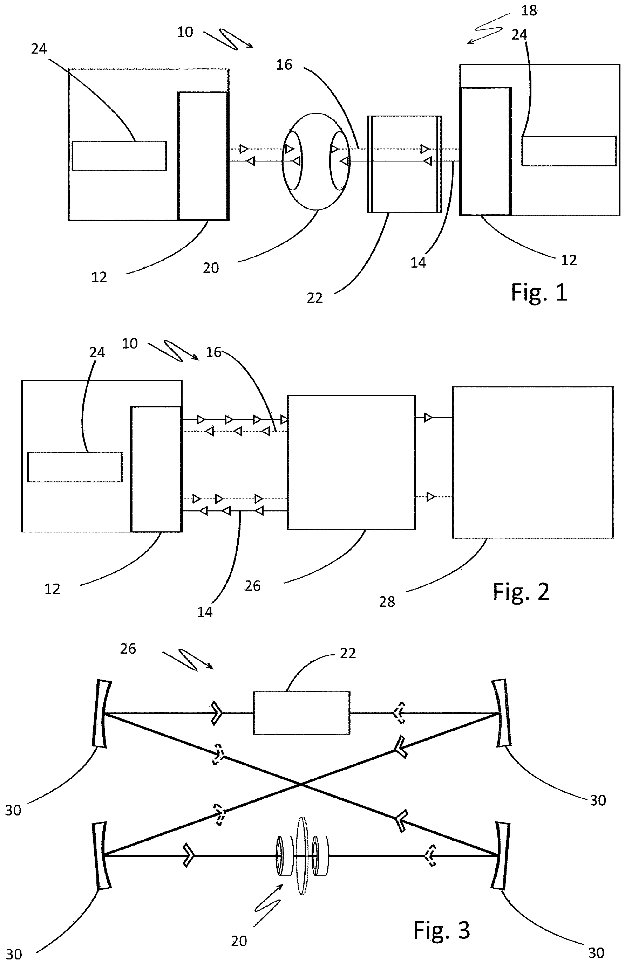

Figure 1 shows a simplified scheme of a device 10 for an optical chiral analysis of a chiral material according to the present invention. The device 10 comprises a two-part light source 12, which is configured to continuously provide a first continuous laser beam 14 and second continuous wave laser beam 16. In Figure 1 the first laser beam 14 is indicated by a solid line, whereas the second laser beam 16 is indicated by a dashed line.

The device 10 further comprises light-guiding means 18 for guiding said first beam 14 and second beam 16 such that one beam passes in a first propagation direction through a Faraday rotator 20 and in the first propagation direction through a sample container 22 and the second beam 16 passes in a second propagation direction through the sample container 22 and in the second propagation direction through the Faraday rotator 20. The first propagation direction is opposite to the second propagation direction. In the shown example the advantageous arrangement of the two-part light source 12 and the detector means form the light guiding means 18. Thus, light guiding means 18 is in this context broad and covers any methodology to achieve the above-described light paths.

The sample container 22 is configured to house the chiral material and is a part of an optical resonator.

When following the above described paths, the first beam 14 and the second beam 16 can resonantly couple in an R mode and an L mode respectively.

The device 10 further comprises detector means 24 for detecting beam properties of the first beam 14 and the second beam 16. Said detector means 24 comprise a control loop for controlling the first beam 14 and/or the second beam 16 to a resonance of said R and L modes and an acquisition device to read out the frequencies and polarizations for a measurement of the chirality of the chiral material in the sample container 22.

Figure 2 shows a simplified scheme of an alternative device 10 according to the present invention. The light-guiding means 18, the sample container 22 and the Faraday rotator 20 form an optical resonator 26. The device 10 further comprises an optional output monitor 28.

A continuous-wave laser radiation, e.g. the first beam 14 and the second beam 16, is allowed to resonantly couple into the optical resonator 26, where an integer number m of wavelengths equals the resonator length L. With the resonator length $L$, the wavelength of a resonator mode is $\lambda = L/m$. The optical frequency of a resonator mode, its resonant frequency, is $f \sim mc/(nL)$, where c is the speed of light in vacuum and $n$ the refractive index of the intraresonator material. When the emission frequency of the light source 12 is stabilized to a mode of a dimensionally stable resonator 26, the wavelength of the emission frequency of the light source 12 and, therefore, of the laser beams 14, 16 will be fixed, and the frequency of the laser beams 14, 16 will track any changes in refractive index as: $df/_f = — dn/_n$.

Absolute refractive index measurements become possible by first measuring a resonant frequency with the resonator 26 at vacuum and then measuring its resonant frequency when the resonator 26 is filled with a material. A determination of the absolute refractive index of the material is possible via the recording of the change in the resonator mode number m going from vacuum to a specified pressure, change in a concentration of a substance or when a film of a solid material is built from zero to a predefined thickness.

As such, measurements of changes in refractive index can be realized by measuring changes in the frequency of the laser radiation when it is stabilized to a resonator 26 mode and the intra-resonator refractive index changes.

There is, however, an alternative approach: It is also possible to stabilize the resonant frequency of a resonator mode to the frequency of the laser source (12) and, therefore, one of the laser beams 14, 16. This can be realized for example by using a piezo element that allows to control the optical length of the resonator 26 and, hence, tune the resonant frequencies of the resonator 26. Monitoring the voltage supplied to the piezo element allows to record changes in the length of the resonator as: $dL/_L = - dn/_n$. By measuring the piezo element voltage changes in the resonator length are derived, which are, in turn, proportional to changes in refractive index.

An optional total sample analysis can be conducted. With a total sample analysis the total chiroptical signal of a sample can be obtained, i.e. the cumulative effect of the chiroptical rotations from each mixture component. For instance, let's assume a mixture consisting of i chiral substances, where each substance has its own specific optical rotation $[\alpha_i]_\lambda^T$, which describes the angle of linear polarization rotation observed at a temperature T and wavelength $\lambda$ per pathlength and concentration. The total chiroptical signal is then given by: $\varphi_{total} \propto \sum_i c_i \times [\alpha_i]_\lambda^T$, where $c_i$ is the amount-of-substance fraction of each component within the mixture. As such, the total analysis of a racemic mixture, i. e. an equimolar mixture of both enantiomers of a chiral substance, will always yield a zero chiroptical signal.

A total sample analysis can for example be conducted and/or a chromatography can be conducted. The chromatography allows for the separation of a mixture and, hence, enables the detection of each mixture component individually. The advantage of chromatography, therefore, is that it allows to identify all components of a mixture. The disadvantages are: It is time-intensive - a typical chromatogram requires several minutes. The elution order, i.e. the retention time of each component, particularly of the enantiomers of a chiral substance, strongly depends on the properties of the chosen chiral column and all instrument conditions during the chromatographic analysis, which can complicate analysis. Different columns are required to analyze different chemical species and substances with different volatilities, polarities and/or masses, and each substance must be calibrated individually.

Generally, the presented approach is suitable for chirality measurements in all phases, particularly both in gas and liquid phase. As such, the setup can be employed as a chirality detector in both gas and liquid chromatography.

Figure 3 shows a simplified scheme of a resonator 26 in the form of a bowtie arrangement. The device 10 may be a resonator-enhanced optical polarimeter, which is based on a ring resonator 26 consisting of four reflective elements 30 arranged in a bowtie configuration as shown in Figure 3.

Such a ring optical resonator 26 can support two distinct counter-propagating laser beams 14, 16. These two laser beams 14, 16 may be configured to enter and exit the resonator 26 from reflective elements 30 and can, therefore, be controlled and probed separately, both in transmission and in reflection.

An intra-resonator magneto-optic window, e.g. the Faraday rotator 20, allows to generate a Faraday rotation $\theta_F$ through the application of a longitudinal magnetic field B. This generated intra-resonator Faraday-related circular birefringence splits symmetrically the eigenfrequency spectrum of the resonator 26 into two orthogonal circularly polarized modes, which are denoted as R and L modes, separated by $2f_F = 2\theta_F * FSR/\pi$, where $FSR = \frac{c}{nL}$ is the resonator's free spectral range *(FSR)*, with c the speed of light, *L* the length of the resonator 26, and *n* the refractive index of the material within the resonator 26.

In the absence of any chiral material, this splitting is identical for both propagation directions: $\delta f_{first\ propagation\ direction} = \delta f_{second\ propagation\ direction} = 2f_F$. The introduction of a chiral material causes circular birefringence $\varphi_c$, which is linearly proportional to the material's chirality parameter $\kappa$ and, therefore, its density. In the presence of a chiral material, the frequency splitting between the R and L modes becomes different for the propagation directions, i.e.

$\delta f_{first\ propagation\ direction} = 2|f_F + f_c|$ and $\delta f_{second\ propagation\ direction} = 2|f_F - f_c|$, where $f_c = \varphi_c * FSR/\pi$. Thus, the resonator's mode, frequency, spectrum consist of four distinct and non-degenerate R and L modes.

The chirality parameter of the chiral substance, $\kappa$, can be determined by measurement of the chiral-dependent frequency splitting $f_c$. To achieve this a frequency-based measurement scheme can be employed, which relies on the reflection signals of the resonator 26.

A possible but not shown experimental setup can be as follows. Firstly, a laser beam is split into two parts to form the first beam 14 and the second beam 16, wherein their respective relative intensities can be controlled using, for instance, a half-wave plate placed before a polarizing beam splitter. The resulting laser beams 14, 16 are then coupled, through separate optical paths, to propagation modes of the resonator 26.

To independently tune and control the frequencies of these two beams 14, 16 acousto-optic modulators AOM can be used. This is possible in a single-pass and double-pass configuration. To independently control their polarization state electro-optic modulators EOM followed by quarter-wave plates can be used.

There exist alternative options to perform such a polarization control. This overall optical configuration allows to tune and control jointly and independently both the frequency and polarization of each laser beam 14, 16. This allows to switch precisely and rapidly - continuously or step-wise - their polarization from linear to circular and back, or from right (left) to left (right) circularly polarized.

The speed with which these parameters can be controlled depends on the operational bandwidth of the modulators. Furthermore, if the beams 14, 16 are coupled into the resonator 26 from the same side, the above-described optical configuration also allows to direct the reflected beams 14, 16 through the same optical paths as their incident counterparts, and detect them in separate photodetectors with the use of polarizing beam splitters positioned directly after the AOMs.

If the coherence properties of the continuous-wave laser source and the resonator 26 length are such that the laser's frequency linewidth is significantly smaller than that of the linewidth of the resonator 26, the beams 14, 16 can resonantly couple into the resonator 26 by exciting a single resonator-mode at a time, which also possesses a specific polarization state defined by its eigen-polarization characteristics.

As a result, using the previously described optical setup, and depending on the frequency of each laser beam 14, 16, all possible resonator modes can be addressed in a selective way, individually. Hence, the accurate and precise measurement of the central frequencies of the resonator modes allows for the extraction of the chiral-dependent frequency splitting $f_c$.

This becomes possible with the use of a modulation scheme that allows to generate an antisymmetric resonance curve, i.e. an error signal, around the central tuning condition of a given resonator 26 mode through their respective reflected signals. A phase or frequency modulation technique can be used to generate an antisymmetric resonance curve.

The generation of such error signals from the reflected beams can be achieved, for instance, by employing the known Pound-Drever-Hall PDH technique. A PDH frequency stabilization/locking method offers the following advantages: since it is a modulation-based scheme, the measurements are effectively decoupled by the laser's intensity noise, i.e. frequency noise is decoupled from intensity noise, which is not the case for experimental schemes based on transmission measurements; and the overall feedback system is not limited by the response time of the optical resonator 26, and one can measure, and suppress, frequency fluctuations that occur at rates faster than the resonator 26 can respond.

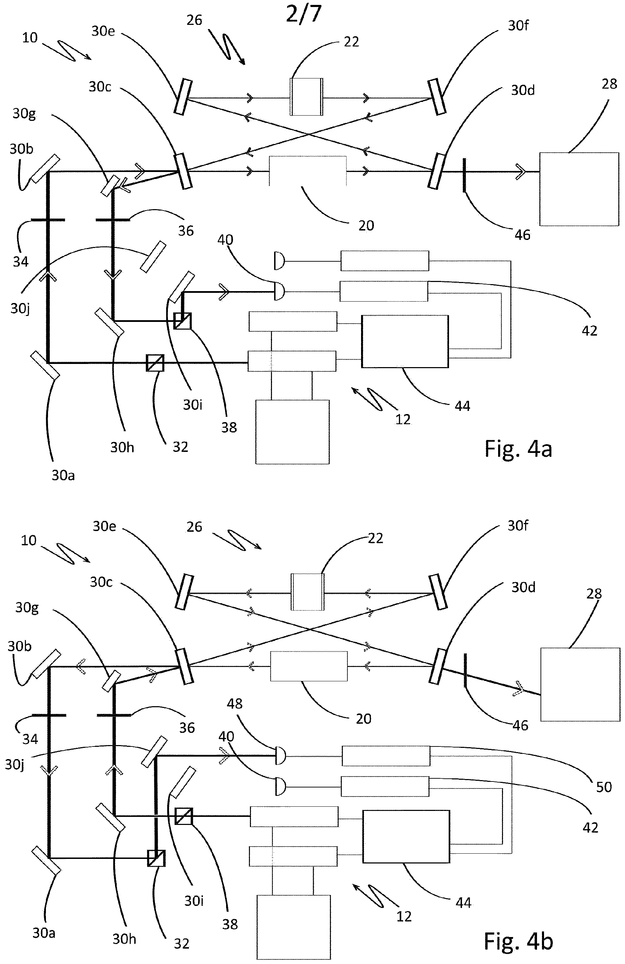

Figure 4a shows a path of the first beam 14 in a simplified scheme of the device 10. The first beam 16 is emitted by the light source 12, for example a laser. The first beam 14 passes through a first polarization beam splitter 32 and is reflected by a reflective element 30a to pass through a generic first retardation device 34 that can comprise an EOM and/or a retardation plate and allows to fully control the polarization of the first beam 14.

After this, the first beam 14 is reflected by a reflective element 30b into the bowtie resonator 26 arrangement, where the first beam 14 passes through a reflective element 30c, passes through the Faraday rotator 20 and is reflected by a half reflective element 30d. The half reflective element 30d also transmits a part of the first beam 14. However, the reflected part of the first beam is then reflected by a reflective element 30e, passes through the sample container 22 and is reflected by a reflective element 30f. The first beam 14 is then both reflected by a reflective element 30c and transmitted through the half reflective element 30c and reflected by a reflective element 30g, then by a reflective element 30h and is reflected in a second radiation polarizing beamsplitter 38. The deflected first beam 14 is then reflected by a reflective element 30i and detected in a first detector 40.

After that, the detected signal is mixed in a first phase and frequency modulator 42 whose output is used by frequency stabilization electronics 44 for the stabilization of the frequency of the light source 12 and/or of the first beam 14.

The part of the first beam 14 that is transmitted through the half reflective element 30d, passes a generic retardation device 46 and is analyzed by the optional output monitor 28. This scheme allows to monitor the transmitted power from the resonator 26 and to simultaneously measure the polarization state of the first beam 14.

Figure 4b shows a light path of the second beam 16 in a simplified scheme of a device 10. The second beam 16 is emitted by the light source 12, for example a laser.

The second beam 16 passes through the second polarization beam splitter 38, is reflected by the reflective element 30h to pass through a generic second retardation plate 36 that allows to control the polarization of the second beam 16.

After this, the second beam 16 is reflected by the reflective element 30g into the bowtie resonator 26, where the second beam 16 passes through the half reflective element 30c, is reflected by the reflective element 30f, passes through the sample container 22, is reflected by the reflective element 30e and is partly reflected by the half reflective element 30d. The reflected part of the second beam 16 passes through the Faraday rotator 20 and is transmitted through the half reflective element 30c.

The transmitted second beam 16 is reflected by the reflective element 30b, passes through the first retardation plate 34, is reflected by the reflective element 30a and is reflected in the first radiation polarizing beamsplitter 32.

The reflected beam is reflected by a reflective element 30j and detected in a second detector 48. After that, the detected signal is mixed in a second phase and frequency modulator 50 whose output is used for the stabilization of the frequency of the second beam 16 by using the frequency stabilization electronics 44.

Monitoring can optionally be done since the second beam 16 is also transmitted in the resonator 26 through the half reflective element 30d and passes the generic retardation device 46 and is detected in an optional output monitor 28. This scheme allows to monitor the transmitted power from the resonator 26 and to simultaneously measure the polarization state of the second beam 16.

In the second phase and frequency modulator 50 a second error signal is demodulated from the second laser beam 16. There are several possibilities how to perform the measurement using the generated second error signals. For example, the frequency corrections from the second error signal are fed back to the light source 12 and/or to an AO device that controls the frequency of the second laser beam 16 to keep the frequency of the second laser beam at the correct frequency to match the mode(s) of the resonator 26 of the second propagation direction and, as such, couple into the resonator 26.

The mode which is excited depends also on the selected input polarization. Fast frequency noise, such as vibrations of the resonator's reflective elements 30 and the fast frequency noise of the light source 12 itself, can be compensated by separating the fast frequency corrections from error signals and, using a fast control feedback loop, feed them on the frequency stabilization electronics 44 that further control the frequency of the light source 12 and/or the laser beams 14, 16.

A measurement of the frequency corrections provides the frequency difference between the 'zero-points' of the error signals.

Coupling into the R mode pair this frequency difference is equal to $2 * f_c$. while coupling into the L mode pair this frequency difference is equal to $-2 * f_c$. This measurement scheme is insensitive to any other sources that may commonly affect the R and L mode-pairs and, thus, this frequency-based measurement scheme enables the absolute measurement of the chirality parameter $\kappa$, through the direct measurement of $f_c = \varphi_c * FSR/\pi$.

Such a measurement can be performed using frequency counters capable of offering, for example, 12-digit resolution and accuracy in 1-s averaging time. The average refractive index of any material present within the sample container 22 of the device 10 can be measured accurately by continuously monitoring the frequency of a resonator mode and/or the length of the optical resonator 26 as described above.

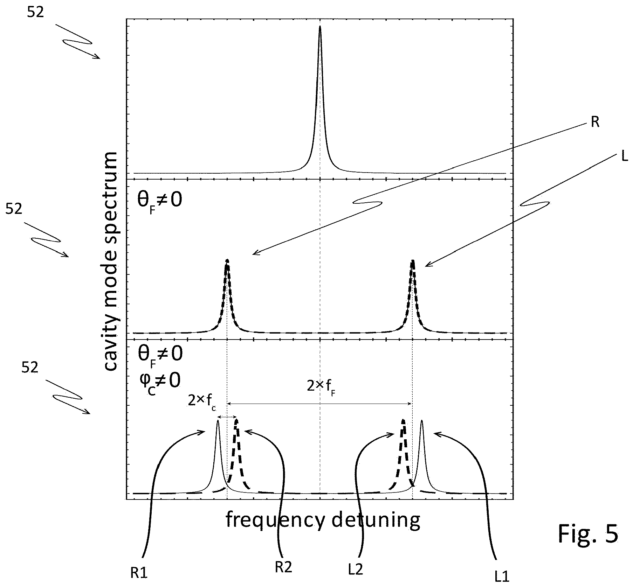

Figure 5 shows three modeled spectra 52 which can be derived with a device 10 according to the present invention. On the abscissa or X-axis, a frequency detuning is shown and on the ordinate, or the Y-axis, a normalized intensity is shown, both in arbitrary units. Modes in the first propagation direction are shown as solid lines and modes in the second propagation direction are shown as dashed lines.

An optical resonator 26 has frequency eigenmodes. The properties of the resonator 26, i.e. length, radius of curvature of the reflective elements 30, intra-resonator refractive index define the properties of these eigenmodes. The polarization state of the eigenmodes of the resonator 26 is defined by the polarization properties of the resonator 26. It is therefore affected by any intra-resonator polarization-selective element. For an optical resonator 26 that has no way of distinguishing between different polarizations, i.e. a resonator 26 without any kind of intra-resonator polarization anisotropies, the eigenmodes are degenerate to all polarization states, i.e. light of any polarization is allowed to resonantly couple into the resonator 26. This is shown in the top spectrum 52 of Figure 5.

The introduction of a polarization anisotropy, however, either a Faraday rotator 20 or a chiral material, affects the polarization properties of the eigenmodes of the resonator's 26. In particular, under the influence of circular birefringence, each resonator eigenmode splits into two non-degenerate modes R, L of orthogonal polarization. All these hold for both propagation directions, i.e. the resonator 26 eigenmodes are identical for both propagation modes. Their relative frequencies can be different, though. This is shown in the center plot of Figure 5.

The Faraday rotator 20, splits each resonator 26 eigenmode into two modes of right and left circular polarization, separated by $2f_F = 2\theta_F \cdot FSR/\pi$, where $FSR = c/(nL)$ is the free spectral range of the resonator 26, with c the speed of light and $L$ the length of the resonator 26, and $n$ the refractive index of the material within the resonator 26. Due to the nature of the Faraday effect, this splitting is identical for both propagation directions in the resonator 26. The introduction of the chiral sample though, splits the modes of each propagation direction further by $2f_c = 2\varphi_c \cdot FSR/\pi$. These result in the resonator spectrum shown in the lower plot of Figure 5 with four distinct resonator modes R1, R2, L1, L2, with splitting between R1 and L1 being $\delta f_{first\ propagation\ direction} = 2|f_F + f_c|$ and splitting between R2 and L2 being $\delta f_{second\ propagation\ direction} = 2|f_F - f_c|$. Measurement of the frequency difference between the R and L mode pairs enables the direct measurement of $\varphi_c$ ($\propto f_c$).

The ability to perform a total sample analysis and measure the overall chiroptical signal of a complex mixture in an absolute manner, opens the possibility for a rapid and robust quality control analysis in real time. Such a possibility is essential, for instance, in rapidly identifying purity and even authenticity.

In the simplest case a fake product may comprise a mixture that is produced using racemates or through chemical synthesis that does not incorporate any enantioselective procedure. Thus, the fake product will be racemic. As a result, the resulting frequency splitting between the R and L mode pairs will be zero and the overall chiroptical signal will be zero.

In contrast, if a fake product is produced using natural material sources or using enantioselective synthesis it should be chiral, yielding a non-zero chiroptical signal but generally different than the original, and even of different sign. Similarly, an imitation sample that is adulterated or contains different chiral and achiral substances may result in a different frequency splitting and, therefore, in a chiroptical signal that differs from that of an original product.

The ability to simultaneously measure the overall concentration of all volatile achiral and/or chiral components within a complex mixture through an average refractive index measurement, allows to accurately determine the concentration of any chiral components within the complex mixture. This is important in identifying possible sample adulteration.

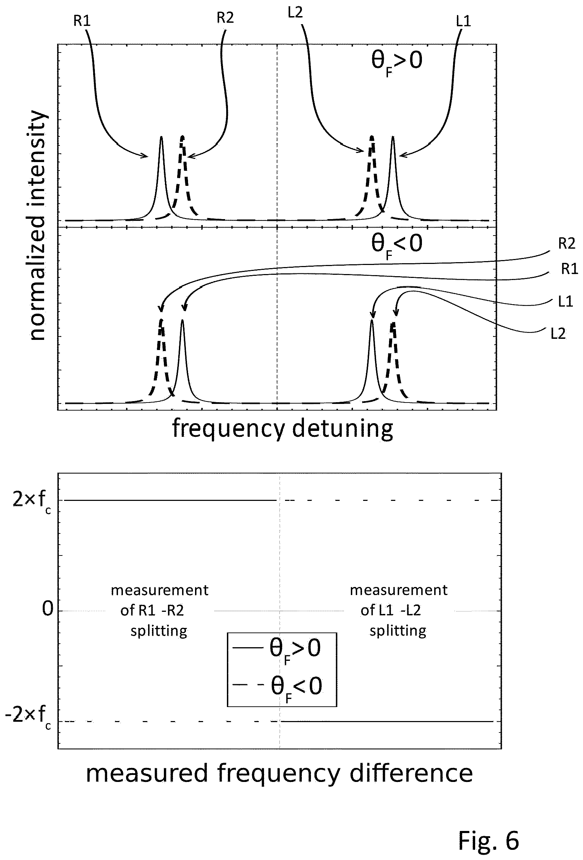

Figures 6 to 8 show signal reversals, which are operations under which an experimental condition can be changed, e.g. reversing the direction of the magnetic field applied on the Faraday rotator 20 or reversing the input polarization of the first laser beam 14 and/or second laser beam 16 to reverse the desired signal.

In Figures 6 to 8 a general overview of the effect each reversal has on the measurement is shown. In a top plot the state before the signal reversal is shown. In the center plot the state after the signal reversal is shown and in the bottom plot the measurement of the frequency difference is shown.

In the simplest of cases, a single resonator mode can be excited per beam 14, 16. For this, two conditions must be simultaneously satisfied: To resonantly couple each laser beam 14, 16 into the resonator 26, both the frequency and the polarization of the first laser beam 14 or the second laser beam 16 need to match with the frequency and the polarization of a particular resonator 26 mode.

For instance, by tuning the laser radiation frequency of the first beam 14 on resonance with the R1 mode but maintaining its polarization state as left circularly polarized, it will not be possible to resonantly couple into the R1 mode. Considering all these, by controlling both the frequency and the polarization of the input laser beams 14, 16 it is possible to choose which mode R1, R2, L1, L2 to resonantly excite, and therefore, implement the signal reversing operations.

Experimental signal reversals can isolate the chiral signal from background noise sources and/or achiral signals that can interfere with the measurement, and allow for the absolute measurement of the chiral signals without the need to remove the sample. This is a key advantage of resonator-enhanced chiral polarimetry. The use of continuous-wave laser sources and the implementation of a fully continuous-wave-based measurement scheme, both enable several signal reversal operations that allow to further isolate the chiral signals from noise, extending those demonstrated in measurement schemes that employ pulsed laser sourced or continuous-wave-laser sources that are rapidly turned off to generate ring-down polarimetric signals.

Figure 6 shows a modeled spectrum before and after a magnetic field reversal respectively. Due to the non-reciprocal nature of the Faraday effect, when the magnetic field reverses, the sign of $\theta_F$ reverses. This way, by reversing the magnetic field the following changes are induced: $\delta f_{first\ propagation\ direction} = 2|\pm f_F + f_c|$ and $\delta f_{second\ propagation\ direction} = 2|\pm f_F - f_c|$, where the $\pm$ reflects the direction of the magnetic field. This results in a reversal of the relative positions of the R1 R2 and L1 L2 mode pairs, which results in a reversal in their frequency difference. The chiroptical signal can be extracted directly from the frequency splittings of the R1-R2 and L1-L2 mode pairs and/or from: $4\varphi_c = \pm(\delta f_{first\ propagation\ direction} - \delta f_{second\ propagation\ direction})\pi/FSR$. Subtracting these two measurements, which are obtained for the two opposite magnetic field directions, results in: $8\varphi_c$.

Apart from enabling an absolute measurement, the signal-to-noise ratio is enhanced. Reversing the magnetic field direction reverses the sign of the Faraday rotation, which results in interchanging the polarization character of the resonator modes R1, R2, L1, L2. The magnetic field reversal will therefore result in a change in the sign of the measured chiral-dependent frequency splitting, allowing $\varphi_c$ to be determined with increased signal-to-noise ratio by the subtraction of the two measurements for the different magnetic field directions.

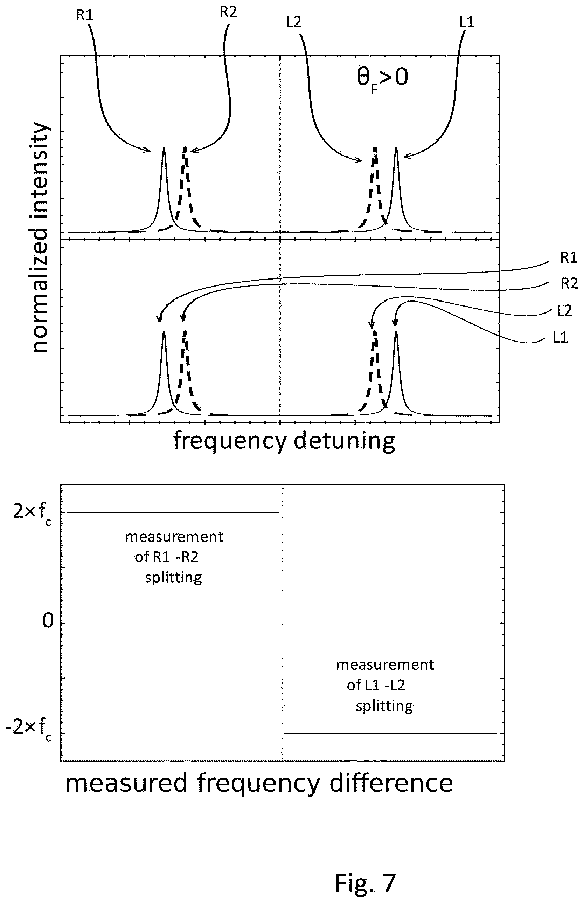

Figure 7 shows a modeled spectrum before and after a frequency jump. Considering that only one mode at a time and per beam 14, 16 can be excited, alternating the frequency and changing at the same time the polarization or alternating the polarization and changing at the same time the frequency, the signal can be reversed. These two signal reversals result in identical changes. And, similarly to the case of the magnetic field reversal, the signal reversals allow to get the chiral-dependent frequency splitting with enhanced signal-to-noise ratio.

Coupling into the resonator 26 using linearly polarized light allows to resonantly excite both R and L modes, and shifting, preferably in a step-wise fashion, the frequency of the laser from exciting one mode-pair to exciting the other one.

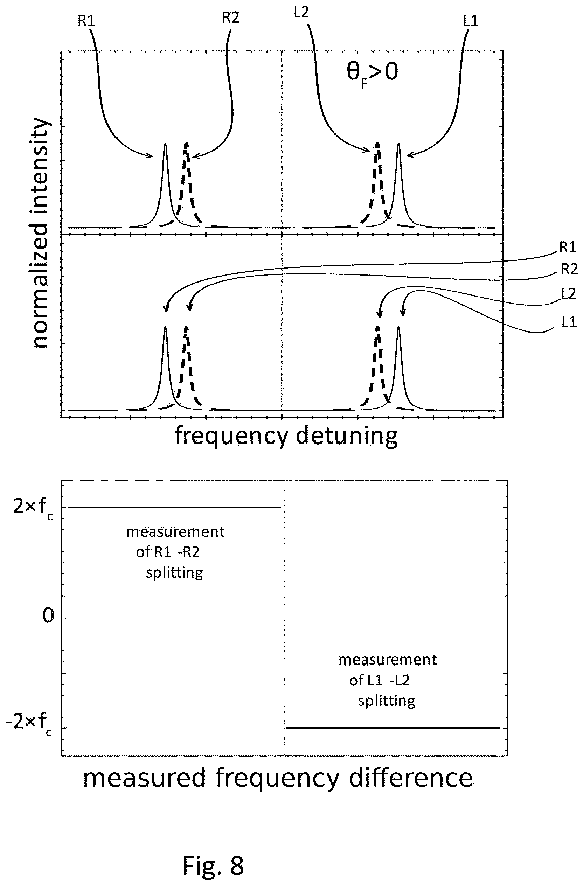

Figure 8 shows a modeled spectrum before and after a polarization reversal, reversing the input light polarization from left to right circularly polarized using devices such as for example electro-optic or photo-elastic modulators. This operation will result in a change in the sign of the measured chiral rotation, allowing $\varphi_c$ to be determined with increased signal-to-noise ratio by subtracting the two measurements.

The above-described signal reversals offer two general advantages: the increase of the measurement's signal-to-noise ratio, and the ability to further perform chirality measurements in an absolute manner without the need for sample removal.

However, from the experimental scheme described above, it becomes apparent that in the case of a frequency-based measurement scheme employing continuous-wave laser sources, as the one described above, such a scheme can provide accurate and absolute chirality measurements without the implementation of signal reversals, i.e. it is not a necessary condition for absolute measurements contrary to the case of pulsed-based, resonator-based chirality-sensitive polarimetry.

The reason is that different resonator modes R1, R2, L1, L2 can be resolved and independently addressed/probed. If the polarization modes are of pure circular character, the ability to detect simultaneously the central frequencies of the resonator mode-pairs offers excellent common mode rejection and is effectively blind to any possible mechanisms that may result in frequency shifts common to all resonator modes R1, R2, L1, L2 such as resonator resonance drifts related to thermal and acoustic noise sources, magnetic field fluctuations, etc.

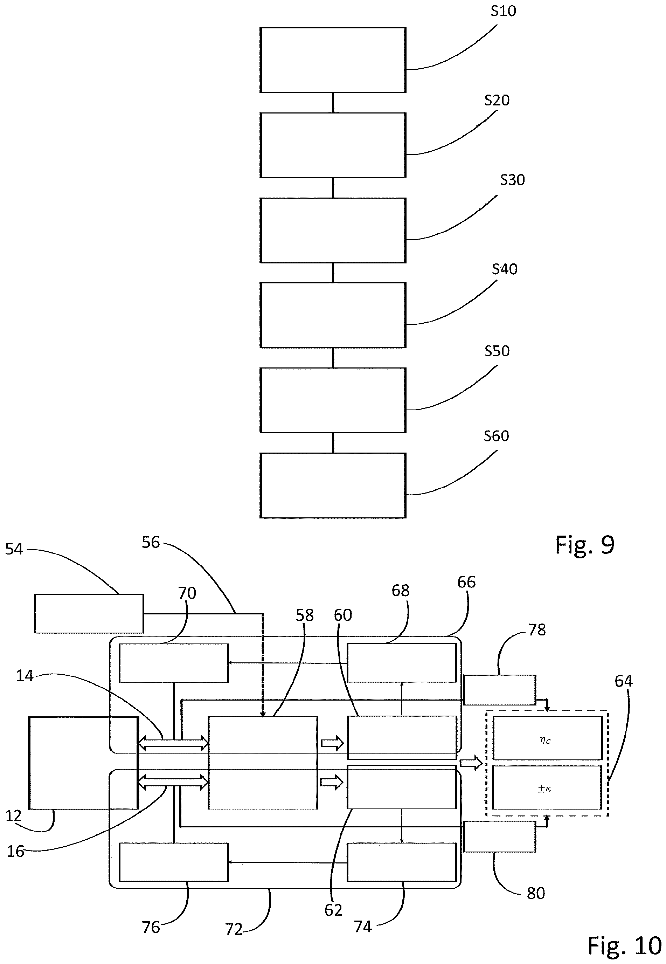

Figure 9 shows schematically the steps of a method for an optical chiral analysis of a chiral material according to the present invention.

In a first step S10 a first and second continuous wave laser beam 14, 16 are continuously provided. For example by a light source 12 as described above.

In a second step S20 a chiral material is provided in a sample container 22. The sample container 22 is a part of an optical resonator.

Preferably providing a chiral material in a sample container 22 comprises a filling of the chiral material in the sample container 22 and monitoring the beam properties during the filling to calculate an average refractive index of the chiral material.

In a third step S30 a Faraday rotator 20 is provided, wherein the sample container 22 and the Faraday rotator 20 are a part of an optical resonator 26.

A fourth step S40 comprises guiding the first laser beam 14 in a first propagation direction through the Faraday rotator 20 and in the first propagation direction through the sample container 22 and guiding the second laser beam 16 in a second propagation direction through the Faraday rotator 20 and in the second propagation direction through the sample container 22. The first propagation direction is opposite to the second propagation direction, to generate an R mode and L mode in the optical resonator 26 for each beam 14, 16, respectively.

Preferably a guiding of the beams 14, 16 comprises guiding said beams 14, 16 in the resonator 26 configured in a bowtie arrangement and reflecting and/or transmitting said beams 14, 16 from the resonator 26. The reflected beams 14, 16 are used as control signal for a control loop to keep the beams 14, 16 in resonance with the modes R1, R2, L1, L2.

In a fifth step S50 beam properties of the first beam 14 and/or the second beam 16 are detected. In an advanced embodiment the beam properties are derived by detecting modes R1, R2, L1, L2 of the first beam 14 and/or the second beam 16 and deriving a resonator spectrum 52 comprising four eigenmodes.

The four eigenmodes comprise an R mode pair of the resonator 26 which the first laser beam 14 and the second laser beam 16 couple into and an L mode pair of the resonator 26 which the first laser beam 14 and the second laser beam 16 couple into. A mode splitting of the R mode pair and the L mode pair is used to extract the chirality of the chiral material. Additionally or alternatively the resonance frequency of any of the eigenmodes is used to extract the average refractive index of the chiral material.

In a very advanced embodiment deriving the resonator spectrum comprises reversing signals to derive a further resonator spectrum from the modes R1, R2, L1, L2 of the first beam 14 and/or the second beam 16. Preferably the resonator spectrum and the further resonator spectrum are combined to reduce background noise. As described above reversing signals can comprise alternating the frequency of the light source 12 to excite different mode pairs, reversing an input light polarization or reversing a magnetic field of the Faraday rotator 26.

Preferably beam properties of the first beam 14 and/or the second beam 16 are detected by a generation of an error signal from the first beam 14 and/or the second beam 16 and using said signal for the control loop to measure the frequency of the first beam 14 and/or the second beam 16.

A sixth step S60 comprises deriving an average refractive index and a chirality of the chiral material from said beam properties.

Figure 10 shows a brief overview of a possible measurement via a flow chart according to a preferred embodiment of a method according to the present invention.

A sample of a chiral material 54 is introduced 56 to perform a measurement by employing resonator-enhanced chirality-sensitive polarimetry 58.

A first laser beam 14 and a second laser beam 16 of a light source 12 are applied for the resonator-based chirality-sensitive polarimetry 58, wherein a first optical radiation output 60 of the first beam 14 and/or a second optical radiation output 62 of the second beam 16 can be used in transmission or reflection to allow a $\eta_c$ and/or $\pm\kappa$ measurement 64.

In a first control loop 66 a first error signal 68 from the first optical radiation output 60 is used in a first frequency stabilization scheme 70 to modify the first laser beam 14. The same applies for the second laser beam 16 where in a second control loop 72 a second error signal 74 from the second optical radiation output 62 is used in a second frequency stabilization scheme 76 to modify the second laser beam 16.

Via a first frequency measurement 78 of the first laser beam 14 in a state controlled by the first control loop the $\eta_c$ and/or $\pm\kappa$ can be derived. The same applies to a second frequency measurement 80 of the second laser beam 16.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the description is intended to be illustrative, but not limiting the scope of the disclosure, as well as other claims. The disclosure, including any readily discernible variants of the teachings herein, defines, in part, the scope of the foregoing claim terminology such that no inventive subject matter is dedicated to the public.

The person skilled in the art recognizes that the ability to perform an absolute optical chiral analysis opens a variety of possible applications from which two major applications are mentioned in the following:

Real-time quantitative and accurate analytical quality control of complex chemical mixtures is possible for the assessment of purity and/or enantiomeric excess. This can be particularly important for the counterfeit analysis of drugs and cosmetics and for identifying adulterated chemical mixtures.

Real-time measurement of the emissions of volatile substances from a biological organism, such as humans in sickness or plants under stress and/or threat is possible.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such software may also be distributed in other forms, such as via the Internet or other wired or wireless telecommunication systems. A method according to the present invention may particularly be carried out to control the operation of a software defined radio.

The elements of the disclosed devices, circuitry and flow chart may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

**Claims**

1. Device (10) for an optical chiral analysis of a chiral material (54) comprising:

a light source (12) configured to continuously provide a first beam (14) and second beam (16), wherein the first beam and second beam are each a continuous wave laser beam;
a sample container (22) for housing the chiral material, wherein the sample container is a part of an optical resonator;
a Faraday rotator (20), wherein the Faraday rotator is a part of the optical resonator (26);
light-guiding means (18) for guiding said first beam and second beam,
wherein the means are configured to guide

one beam in a first propagation direction through the Faraday rotator and in the first propagation direction through the sample container,
the other beam in a second propagation direction through the Faraday rotator and in the second propagation direction through the sample container, wherein in the first propagation direction is opposite to the second propagation direction, to generate an R mode (R1, R2) and L mode (L1, L2) in the optical resonator for each propagation direction respectively;

detector means (24) for detecting beam properties of the first beam and
the second beam; wherein the detector means comprise a control loop (66, 72) for controlling the first beam and/or the second beam into a resonance with said R and L modes and an acquisition device to read out the resonant frequencies and/or polarizations of the first beam and/or
the second beam for a measurement of the total refractive index and
chirality of the chiral material in the sample container.

2. Device (10) as claimed in the preceding claim, wherein the control loop (66, 72) is configured to modify

the optical length of the optical resonator; and/or
the frequency, polarization and/or amplitude of the first beam (14) and/or the second beam (16).

3. Device (10) as claimed in the preceding claim, wherein the control loop (66, 72) comprises
a piezo element to modify the optical length of the optical resonator, or an electro-optic device (EO) and/or an acousto-optic device (AO) to modify the frequency, polarization and/or amplitude of the first beam (14) and/or second beam (16).

4. Device (10) as claimed in one of the preceding claims, wherein the detector means (24) comprise a phase and frequency modulator (42, 50) for modulating the first beam (14) and/or the second beam (16) to comprise an error signal in a resonance with said modes (R1, R2, L1, L2).

5. Device (10) as claimed in the preceding claim, wherein the phase and frequency modulator (42, 50) is configured to apply a phase and/or frequency modulation technique to generate an antisymmetric resonance curve, wherein the phase and/or frequency modulation technique comprises preferably a Pound-Drever-Hall (PDH) technique.

6. Device (10) as claimed in one of claims 4 or 5, wherein the detector means (24) are configured to convert the first beam (14) and/or the second beam (16) into an electrical signal respectively, wherein the converted signals of the first beam and/or the second beam are modified, preferably demodulated, to comprise an error signal in a resonance, wherein said converted and modified signal is used as control signal for the control loop (66, 72).

7. Device (10) as claimed in one of the preceding claims, wherein the detector means (24) for detecting beam properties are configured to apply a signal reversal, wherein a signal reversal comprises

alternating the frequency of the light source (12) to excite different mode pairs (R1, R2, L1, L2);
an input light polarization reversal and/or
a magnetic field reversal of the Faraday rotator's (20) magnetic field.

8. Device (10) as claimed in one of the preceding claims, wherein the means (18) for guiding said first beam (14) and second beam (16) are configured to guide the first beam and second beam in a four mirror resonator set up in a bowtie arrangement.

9. Device as claimed in claim 8, wherein the first beam (14) and/or the second beam (16) are reflected and/or transmitted by the bowtie arrangement and wherein the reflected beams are used as control signals for the control loop (66, 72).

**10.** Method for an optical chiral analysis of a chiral material (54) comprising the following steps:

continuously providing (S10) a first beam (14) and second beam (16),
wherein the first beam and second beam are each a continuous wave laser beam,
providing (S20) the chiral material in a sample container (22), wherein
the sample container is a part of an optical resonator;
providing (S30) a Faraday rotator (20) wherein the Faraday rotator is a part of the optical resonator (26);
guiding (S40) the first laser beam in a first propagation direction through the Faraday rotator and in the first propagation direction through the sample container and guiding the second laser beam in a second propagation direction through the Faraday rotator and in the second propagation direction through the sample container, wherein in the first propagation direction is opposite to the second propagation direction, to generate an R (R1, R2) mode and L mode (L1, L2) in the optical resonator for each propagation direction respectively;
detecting (S50) beam properties of the first beam and of the second beam; and
deriving (S60) an average refractive index and a chirality of the chiral material from said beam properties.

**11.** Method as claimed in the preceding claim, wherein providing (S20) the chiral material (54) in a sample container (22) comprises a filling of the chiral material in the sample container and monitoring the beam properties during the filling to calculate an average refractive index of the chiral material.

**12.** Method as claimed in claim 10 or 11, wherein detecting (S50) beam properties of the first beam (14) and the second beam (16) comprises detecting modes (R1, R2, L1, L2) of the resonator which the first beam and second beam couple into and deriving a resonator spectrum comprising four eigenmodes.

**13.** Method as claimed in claim 12, wherein the four eigenmodes comprise an R mode (R1, R2) pair of the resonator which the first beam (14) and the second beam (16) couple into and an L mode (L1, L2) pair of the resonator which the first beam and the second beam couple into; wherein a mode splitting of the R mode pair and the L mode pair is used to extract the chirality of the chiral material (54) and/or wherein the resonance frequency of any of the eigenmodes is used to extract the average refractive index of the chiral material (54).

**14.** Method as claimed in one of claims 12 or 13, wherein deriving the resonator spectrum comprises reversing signals to derive a further resonator (26) spectrum, from the modes (R1, R2, L1, L2) of the first beam (14) and/or the second beam (16),
wherein preferably measurements with the resonator spectrum and measurements with the further resonator spectrum are combined to reduce background noise, and wherein reversing signals comprises

alternating the frequency of the light source (12) to excite different mode pairs;
reversing an input light polarization and/or
reversing a magnetic field of the Faraday rotator (20).

**15.** Method as claimed in one of the preceding claims, wherein a guiding (S40) of the beams (14, 16) comprises guiding said beams in a bowtie arrangement and reflecting and/or transmitting said beams in the bowtie arrangement, wherein reflected beams are used as control signal for a control loop (66, 72) to keep the beams in resonance with the modes (R1, R2, L1, L2), wherein detecting beam properties preferably comprises the generation of an error signal from the first beam and/or the second beam and using said signal for the control loop to measure the frequency of the first beam (14) and/or of the second beam (16).

Fig. 1

Fig. 2

Fig. 3

Fig. 4a

Fig. 4b

Fig. 5

Fig. 6

Fig. 7

Fig. 8

S10

S20

S30

S40

S50

S60

**Fig. 9**

54   56   70   58   60   68   66   78   64

14

12

16

76   72   62   74   80

$\eta_c$

$\pm\kappa$

**Fig. 10**

Europäisches
Patentamt

European
Patent Office

Office européen
des brevets

# EUROPEAN SEARCH REPORT

**Application Number**

EP 21 18 8044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOUGAS L. ET AL: "Cavity-Enhanced Parity-Nonconserving Optical Rotation in Metastable Xe and Hg", PHYSICAL REVIEW LETTERS, vol. 108, no. 21, 25 May 2012 (2012-05-25), page 210801, XP055877376, US ISSN: 0031-9007, DOI: 10.1103/PhysRevLett.108.210801 Retrieved from the Internet: URL:https://journals.aps.org/prl/pdf/10.11 03/PhysRevLett.108.210801> * the whole document * | 1-5, 7-10, 12-15 | INV. G01N21/21 G01N21/23 G01N21/41 |
| X | BOUGAS L. ET AL: "Fundamentals of cavity-enhanced polarimetry for parity-nonconserving optical rotation measurements: Application to Xe, Hg, and I", PHYSICAL REVIEW A (ATOMIC, MOLECULAR, AND OPTICAL PHYSICS), vol. 89, no. 5, 21 May 2014 (2014-05-21), page 52127, XP055877379, USA ISSN: 1050-2947, DOI: 10.1103/PhysRevA.89.052127 Retrieved from the Internet: URL:https://journals.aps.org/pra/pdf/10.11 03/PhysRevA.89.052127> * section IV.D; figure 2 * | 1-5, 8-10, 12-15 | |
| X,D | US 2015/323445 A1 (RAKITZIS THEODORE PETER [GR]) 12 November 2015 (2015-11-12)  * paragraph [0045] - paragraph [0046]; figures 3-5 * | 1-5, 8-10, 12-15 | TECHNICAL FIELDS SEARCHED (IPC) G01N |

-/--

The present search report has been drawn up for all claims

| Place of search | Date of completion of the search | Examiner |
|---|---|---|
| Munich | 13 January 2022 | Weinberger, Thorsten |

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 21 18 8044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TRAN DANG-BAO-AN ET AL: "Continuous-Wave Cavity-Enhanced Polarimetry for Optical Rotation Measurement of Chiral Molecules", ANALYTICAL CHEMISTRY, vol. 93, no. 13, 26 March 2021 (2021-03-26), pages 5403-5411, XP055877380, US ISSN: 0003-2700, DOI: 10.1021/acs.analchem.0c04651 Retrieved from the Internet: URL:https://pubs.acs.org/doi/pdf/10.1021/acs.analchem.0c04651> * the whole document * | 1,10 | |
| A | BOUGAS LYKOURGOS ET AL: "Chiral cavity ring down polarimetry: Chirality and magnetometry measurements using signal reversals", THE JOURNAL OF CHEMICAL PHYSICS, vol. 143, no. 104202, 9 September 2015 (2015-09-09), XP055877377, Retrieved from the Internet: URL:https://aip.scitation.org/doi/pdf/10.1063/1.4930109> * the whole document * | 1,10 | **TECHNICAL FIELDS SEARCHED (IPC)** |

The present search report has been drawn up for all claims

| Place of search | Date of completion of the search | Examiner |
|---|---|---|
| Munich | 13 January 2022 | Weinberger, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 18 8044

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2022

| Patent document cited in search report | Publication date | Patent family member(s) | Publication date |
|---|---|---|---|
| US 2015323445 A1 | 12-11-2015 | NONE | |

For more details about this annex : see Official Journal of the European Patent Office, No. 12/82

**EP 4 124 848 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015323445 A1